# EUROPEAN PATENT SPECIFICATION

(11) **EP 0 508 764 B1**
(45) Date of publication and mention of the grant of the patent: **03.08.1994**
(21) Application number: 92303143.9
(22) Date of filing: 09.04.1992
(51) Int. Cl.: A01K 3/00, H01B 17/14

(54) **Tape support**
Bandhalter
Support pour ruban

(30) Priority: 09.04.1991 NZ 237768
(43) Date of publication of application: 14.10.1992
(73) Proprietor: GALLAGHER ELECTRONICS LIMITED, Hamilton 2001 (NZ)
(72) Inventor: Walley, John Leonard, Hamilton (NZ)
(74) Representative: Denmark, James

(56) References cited:
- EP-A- 0 255 213
- WO-A-82/04378
- GB-A- 1 392 216
- GB-A- 2 163 464
- US-A- 4 905 968
- US-A- 4 965 413

## Description

### BACKGROUND TO THE INVENTION

This invention relates to tapes and supports.

Reference throughout the specification will be made to the use of the present invention with electric fence tapes, although it should be appreciated that the present invention can also be used for supporting tapes of varying kinds, not only electric fence tapes.

Electric fence tapes usually comprise of a band of synthetic carrier material into which conductive elements such as wires are threaded so that the conductive elements are exposed on both sides of the band. The synthetic carrier material is generally knitted from weft and warp strands and as such the tapes have irregular surfaces.

Electric fence tapes are generally used because in addition to their conductive properties, they are reasonably easy to handle and provide a visual barrier in addition to a conductive barrier.

One problem associated with electric fence tapes is that they tend to be blown about by winds, sag, twist and require regular adjustment and re-tensioning. To solve this problem, a number of tape supports have been designed, however these too have their problems.

A common tape support is one which uses fingers to hold the tape. Although the tape is held vertically in position relative to the fence posts, the fingers allow a considerable amount of lateral movement in the tape which can result in tape sag throughout the fence system. Further, lateral movement of the electric fence tape through wind and other forces, can cause the fingers to erode. This is a result of the abrasive action of the moving conductive wires which can cut through the tape support.

There are some tape supports known which permit the tape to be wound around the support thus restraining lateral movement. Unfortunately, once an electric fence system is set up with these tape supports, the tapes cannot be readily re-tensioned.

There are some tape supports which are in the form of a releaseable clamp having jaws. Clamp supports are required to be made from an insulatory material and generally are made from a plastics material like polyethylene. Unfortunately, most plastics material (including polyethylene) have a low co-efficient of friction and therefore a tape positioned between two jaws made of a plastics material tends to slide between the layers. In an attempt to overcome this problem, tape supports have been designed with a high clamping force. Unfortunately, this too has its problems as a high clamping force can cause breakage in the conductive wires. Further, it is difficult to achieve a high clamping force with two materials with low co-efficients of friction interacting, such as occurs with polyethylene being held against polyethylene.

Further tape supports are disclosed in Great Britain Patent No. 1392216 and United States Patent No. 4965413.

Great Britain Patent No. 1392216 discloses a plastics clip including two arms pivotally connected together, the arms being able to be biased to an open or closed position. In some embodiments jaws are included on the end of the arms, and made from natural rubber. The arms are made from synthetic resin. This clip is not adapted to be mounted on a fixture such as a fence post, nor is an obtuse angle opening mechanism to allow access to the clip during attachment provided.

United States Patent No. 4965413 discloses an electric fence insulator made from polyethylene plastic. A clip unit is provided, and the jaws of the unit are comprised of the single plastic material. A latch is also provided to secure the jaws by securing a vertically overlapping plastic hook. The jaws may open to an acute angle with respect to each other, and no means is disclosed for allowing obtuse angle opening of the clip to allow access to the clip during attachment.

It is an object of the present invention to address the above problems, or at least to provide the public with a useful choice.

Further objects and advantages of the present invention will become apparent from the following description which is given by way of example.

### SUMMARY OF THE INVENTION

According to one aspect of the present invention there is provided a support means for a tape, said support means including a body adapted to be mounted on a fixture such as a fence post, co-acting jaws mounted to said body, gripping means attached to at least one of said jaws and locking means, wherein the material from which the gripping means is formed has a higher coefficient of friction than the material from which the jaws are formed, a secondary locking mechanism capable of holding the jaws open at an acute angle to each other the arrangement and construction being such that the jaws can be closed on said tape to secure the tape by the gripping means, said jaws capable of being locked into a closed position by the locking means.

### BRIEF DESCRIPTION OF THE INVENTION

It can be seen that if there is provided gripping means in addition to the jaws on a tape support, then the tape support can prevent lateral movement of the tape, thus preventing erosion of the tape support.

Further, by having lockable jaws, the tape support can be readily opened to allow re-tensioning of the electric fence tape.

Although in some embodiments there may be gripping means on only one jaw, in preferred embodiments there will be gripping means on each jaw.

The gripping means may just be a surface attached to an insert fitted onto the jaw, or may include a whole insert, or may just be a surface attached directly to the jaw. For ease of reference the gripping means shall be referred to throughout the specification as a whole insert, but it should be appreciated that the term gripping means can cover the aforementioned embodiments.

In one embodiment, the material from which the gripping means is made may be rubber, although of course other materials may be used for the gripping means, for instance, neoprene, elasmers or any material with a higher co-efficient of friction and preferably resilience than the material from which the jaws are manufactured.

Rubber is a material with a number of properties which make it advantageous to be used as a gripping means. In addition to its high coefficient of friction, rubber is soft enough that it is unlikely to damage the conductive wires within the tape. A further advantage with rubber is its resilience. Rubber or any gripping means with a resilient soft face can effectively allow over-travel of the jaws during the closing action of the support thus helping to provide a means by which the tape support material can be well locked together. This is of particular importance when a material such as polyethylene is used for its low co-efficient of friction means that it is difficult to achieve strong locking.

For simplicity of manufacture and ease of assembly, it is envisaged that in preferred embodiments, the gripping means may be formed through the process of extrusion. If the gripping means is sufficiently flexible, then it can be readily manipulated to fit over a complementary shape in at least one of the jaws of the tape support.

It should be appreciated that the jaws of the tape support may come in a variety of forms. In one embodiment, one jaw may be incorporated into the base of the tape support and the second jaw may be an independent member fixed to the base by various means. In one embodiment the second jaw may be fixed to the base by a screw threaded fastener member, although it should be appreciated that alternative fastening means may be used.

In an alternative embodiment of the present invention the jaws may be hinged with respect to each other.

The secondary locking mechanism may come in a variety of forms, but in one embodiment this may be a locating catch.

Having a tape support wherein the jaws can be held open at an acute angle facilitates an improved method of erecting an electric fence system. As an example, tape supports on fence posts with their jaws open at acute angles can support the electric fence tape as it is being tensioned. Once the electric fence tape has been tensioned, it is a simple matter for the farmer to walk along the electric fence line and flick the tape supports in such a manner to close and lock the open jaws, thus securing the tape with respect to the tape support.

According to a further aspect of the present invention there is provided a method of securing tape to a fence system using a support having jaws and gripping means attached to the jaws with a higher co-efficient of friction than the jaws characterised by the steps of:
a) attaching at least one support means for the tape onto each of the fence posts to which it is desired to secure said tape, and
b) placing the tape between gripping means on the jaws of the support means, and
c) moving a jaw of the support means to an acure angle with respect to the other jaw, and
c) tensioning the tape with respect to the fence post, and
d) closing the jaws of the support means on the tape so that the gripping means holds the tape secure with respect to the support means.

In one embodiment of the present invention, the secondary locking mechanism may also enable the jaws to be opened to an obtuse angle to each other which may allow ready access to the body when affixing the tape support to a fence post.

### BRIEF DESCRIPTION OF THE DRAWINGS

Aspects of the present invention will now be described with reference to the accompanying drawings in which:
- Figure 1:: is a side view of a support means in accordance with one possible embodiment of the present invention, and
- Figure 2:: is a part sectional side view of a support means in accordance with another possible embodiment of the present invention, and
- Figure 3:: is a front view of a support means in accordance with the above embodiment of the present invention, and
- Figure 4:: is a side view of a jaw piece for the support means illustrated in Figures 2 and 3, and
- Figure 5:: is a cross-sectional view of one possible gripping means for use with the present invention.

### DESCRIPTION OF PREFERRED EMBODIMENTS OF THIS INVENTION

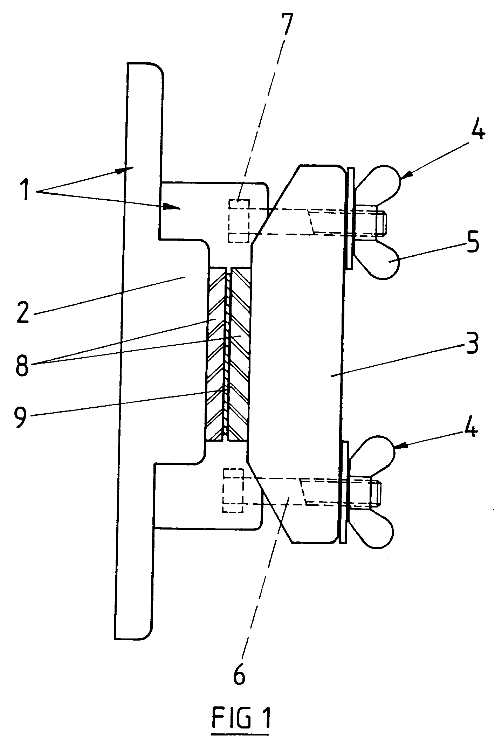

With respect to Figure 1, there is illustrated a support means for a tape with a base member generally indicated by arrow 1. Incorporated into the base member 1 is a jaw 2. There is provided an additional jaw 3 which is an independent member fixed to the base 1 by screw threaded fastener members generally indicated by arrow 4.

The screw threaded fastener members 4 each comprise a wing-nut 5 and a threaded shaft 6. The shaft 6 is engageable with a threaded member 7 which is moulded into or otherwise fixed into the base 1. Detachment of the wing-nuts 5 from the threaded members 7 enables the jaw 3 to be moved away from jaw 2.

Each of the jaw members 2 and 3 have mounted on them gripping means 8 which enhance the grip of the jaws 2 and 3 on a tape 9 positioned therebetween. In this embodiment, the gripping means 8 is formed from material which is more resilient and/or has a higher co-efficient friction than the material from which the jaws are formed.

When the jaws 2 and 3 are clamped onto the tape 9, the resilience and/or surface characteristics of the gripping means 8 enhance the grip of the jaws 2 and 3 on the surfaces of the tape 9 providing a more satisfactory grip than would be obtained if there was only contact with the material from which the rest of the support means is made of.

It should be appreciated that if the gripping means 8 is made of a resilient material with a higher co-efficient of friction, less clamp force is required between the jaws 2 and 3 to ensure that there is no lateral movement of the tape 9 with respect to the jaws 2 and 3. As there is less clamp force, there is a lesser chance that the wire filaments within the tape 9 will break as a result of the clamping force supplied by support means. Further, applying less clamp force may facilitate operation of the support means by the farmer opening or closing the jaws.

If a tape 9 which is supported by a plurality of said support means is loosened from a desired tension, the wing-nuts 5 can be undone slightly so that the gripping means 8 release their grip on the tape 9. This allows the tape 9 to be re-tensioned and secured with respect to the support means by subsequently tightening the wing-nuts 5.

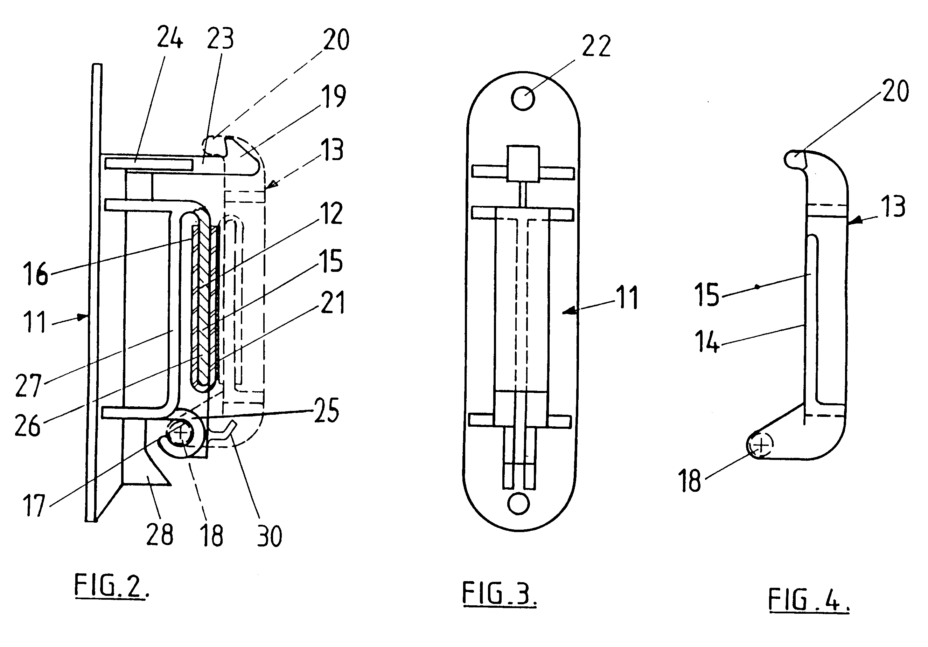

An alternative embodiment to the present invention is illustrated in Figures 2 to 4. In this embodiment, the support means comprises a base member generally indicated by arrow 11 which is integral with a first jaw 12. Pivotally attached to the base 11 is a limb generally indicated by arrow 13. The limb 13 is shown in broken outline on Figure 2. On the underside of the limb 13 is a second jaw 14.

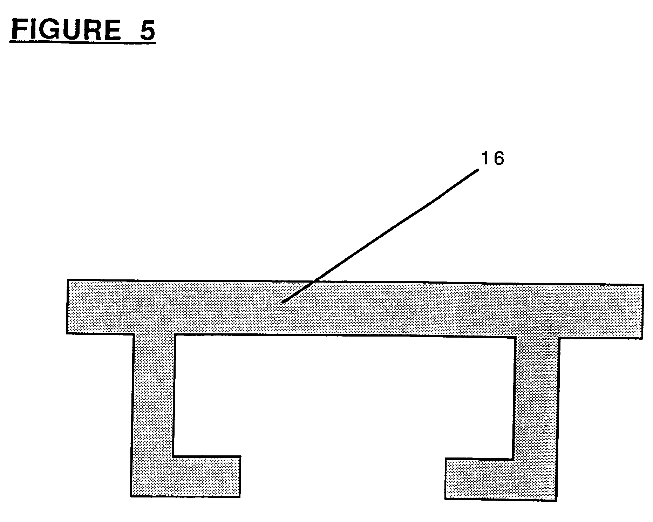

Each of the jaws 12 and 14 are provided with a mounting member 15 to which gripping members 16 are attached. A cross-sectional view of a typical gripping member 16 is illustrated in Figure 5. The shape of the gripping member 16 is complementary to the shape of the mounting member 15. If the gripping means is of a sufficient flexible material as previously described, then it can be readily flexed and placed over the mounting members 15.

A combination of a socket 17 on the base 11 and an axle 18 on the limb 13 provides the means by which the jaw 14 is pivotally attached to the support means. The primary locking mechanism is comprised of a catch 19 which is attached onto the base 11 and complementary latched end 20 which is attached to the limb 13. To pivot the limb 13 with respect to the base 11, the slightly resilient catch 19 is depressed allowing the latch 20 to be removed therefrom. The resilience of the gripping members 16 allows the catch 20 to be pushed downwards so it effectively over-travels with respect to the catch 19, thus tensioning the locking mechanism.

A secondary locking mechanism is provided in the vicinity of the socket 17. This is in the form of a locating catch 30 which interacts with the limb 13. The locating catch 30 is resilient and flexible, and configured so that the limb 13 can be held at an acute angle with respect to the base 11. If further force is applied against the limb 13 away from the base 11, the resilient properties of the locating catch 30 allow it to release the limb 13 allowing it to pivot downwards at an obtuse angle.

Elements of the support means may be moulded in a plastics material. Base 11 may have rounded ends with fixing apertures 22 at either end. Catch 19 is supported by a web 23 and braces 24. Hook 25 which receives axle 18 of the jaw 13, and prong 26 of the mounting member 15 is supported by a bridge 27 which extends from the base 11.

To adjust the tension in the tape supported by a plurality of said support means, each of the jaws are opened to an acute angle while the tape remains supported by the limb 13. After tensioning of the tape, each of the open jaws can be progressively closed.

## Claims

1. An electric fence tape support including a body (11) adapted to be mounted on a fixture such as a fence post, co-acting jaws (12, 14) mounted to said body, gripping means (16) attached to at least one of said jaws and first locking means (19) for said jaws, the material from which the gripping means is formed having a higher co-efficient of friction than the material from which the jaws are formed, the arrangement and construction being such that the jaws can be closed on said tape to secure the tape by the gripping means, said jaws capable of being locked into a closed position by the first locking means, and characterised by including a second locking means (30) capable of holding the jaws open at an acute angle to each other and adapted also to allow the jaws to open at an obtuse angle to each other.

2. A support means for a tape as claimed in claim 1 wherein the material from which the gripping means (16) is formed is more resilient than the material from which the jaws (12,14) are formed.

3. A support means for a tape as claimed in claim 1 wherein the gripping means (16) is of a shape complementary to the shape of a jaw (12,14) and can be readily fitted thereto.

4. A support means for a tape as claimed in of claim 1 wherein the material from which the gripping means (16) is manufactured is rubber.

5. A support means for a tape as claimed in claim 1 wherein the jaws (12,14) are separable from each other.

6. A support means for a tape as claimed in claim 1 wherein the locking means includes a wing-nut (5).

7. A support means for a tape as claimed in claim 1 wherein the jaws (12,14) are pivoted with respect to each other.

8. A support means for a tape as claimed in claim 1 wherein the secondary locking means (30) includes a flexible portion capable of holding the jaws open at an acute angle.

9. A method of manufacturing an electric fence tape support having a body (11) adapted to be mounted on a fixture such as a fence post, co-acting jaws (12, 14) mounted to said body, gripping means (16) attached to at least one of said jaws and a first locking means (19) for said jaws, the material from which the gripping means is formed having a higher coefficient of friction than the material from which the jaws are formed; the arrangement and construction being such that the jaws can be closed on said tape to secure the tape by the gripping means, said jaws capable of being locked into a closed position by the first locking means, characterised by including a second locking means (30) capable of holding the jaws open at both an acute and obtuse angle to each other.

## Patentansprüche

1. Bandhalter für einen elektrischen Zaun, mit einem Grundkörper (11) zum Anbringen an einer Befestigung wie beispielsweise einem Zaunpfosten, mit zusammenwirkenden Klemmbacken (12, 14), die an dem Grundkörper (11) angebracht sind, mit Greiferelementen (16), die zumindest an einer der Klemmbacken (12, 14) befestigt sind, und mit einem ersten Verriegelungselement (19) für die Klemmbacken (12, 14), wobei das Material, aus welchem die Greiferelemente (16) hergestellt sind, einen höheren Reibungskoeffizienten aufweist als das Material, aus welchem die Klemmbacken hergestellt sind, und wobei eine derartige Anordnung und Gestaltung vorgesehen ist, daß die Klemmbacken (12, 14) in Bezug auf das Band (9) schließbar sind, um das Band (9) mittels der Greiferelemente (16) festzuhalten, und daß die Klemmbacken (12, 14) in ihrer Schließstellung mittels des ersten Verriegelungselementes (19) verriegelbar sind, **gekennzeichnet durch** ein zweites Verriegelungselement (30), welches die Klemmbacken (12, 14) unter einem spitzen Winkel zueinander in der Offenstellung halten kann und ferner so ausgebildet ist, daß sich die Klemmbacken (12, 14) unter einem stumpfen Winkel zueinander öffnen lassen.

2. Bandhalter nach Anspruch 2, **dadurch gekennzeichnet**, daß das Material, aus welchem die Greiferelemente (16) hergestellt sind, elastischer ist als das Material, aus welchem die Klemmbacken (12, 14) hergestellt sind.

3. Bandhalter nach Anspruch 1, **dadurch gekennzeichnet,** daß die Greiferelemente (16) eine Form besitzen, welche komplementär zur Form einer Klemmbacke (12, 14) ist und an der Klemmbacke leicht montierbar ist.

4. Bandhalter nach Anspruch 1, **dadurch** **gekennzeichnet,** daß als Material, aus welchem die Greiferelemente (16) hergestellt sind, Gummi vorgesehen ist.

5. Bandhalter nach Anspruch 1, **dadurch gekennzeichnet**, daß die Klemmbacken (12, 14) voneinander trennbar sind.

6. Bandhalter nach Anspruch 1, **dadurch gekennzeichnet**, daß das Verriegelungselement eine Flügelmutter (5) umfaßt.

7. Bandhalter nach Anspruch 1, **dadurch gekennzeichnet**, daß die Klemmbacken (12, 14) schwenkbar zueinander angeordnet sind.

8. Bandhalter nach Anspruch 1, **dadurch gekennzeichnet**, daß das zweite Verriegelungselement (30) einen flexiblen Abschnitt aufweist, welcher die Klemmbacken (12, 14) unter einem spitzen Winkel in der Offenstellung halten kann.

9. Verfahren zum Herstellen eines Bandhalters für einen elektrischen Zaun, welcher (a) einen Grundkörper (11) zum Anbringen an einer Befestigung wie beispielsweise einem Zaunpfosten, (b) zusammenwirkende, an dem Grundkörper (11) angebrachte Klemmbacken (12, 14), (c) zumindest an einer der Klemmbacken (12, 14) befestigte Greiferelemente (16), und (d) ein erstes Verriegelungselement (19) für die Klemmbacken (12, 14) aufweist, wobei das Material, aus welchem die Greiferelemente (16) hergestellt sind, einen höheren Reibungskoeffizienten aufweist als das Material, aus welchem die Klemmbacken hergestellt sind, und wobei eine derartige Anordnung und Gestaltung vorgesehen ist, daß die Klemmbacken (12, 14) in Bezug auf das Band (9) schließbar sind, um das Band (9) mittels der Greiferelemente (16) festzuhalten, und daß die Klemmbacken (12, 14) in ihrer Schließstellung mittels des ersten Verriegelungselementes (19) verriegelbar sind, **gekennzeichnet durch** ein zweites Verriegelungselement (30), mit welchem sich die Klemmbacken (12, 14) sowohl unter einem spitzen als auch unter einem stumpfen Winkel zueinander in der Offenstellung halten lassen.

## Revendications

1. Moyen support de ruban de clôture électrique comprenant un corps (11) prévu pour être monté sur une armature comme un poteau de clôture, des mâchoires (12, 14) qui coopèrent montées sur ledit corps, un moyen d'accrochage (16) fixé sur au moins une desdites mâchoires et un premier moyen de verrouillage (19) pour lesdites mâchoires, dans lequel la matière dont est fait le moyen d'accrochage a un coefficient de frottement plus grand que la matière dont sont faites les mâchoires, l'arrangement et la structure étant tels que les mâchoires peuvent être fermées sur ledit ruban pour le fixer par le moyen d'accrochage, lesdites mâchoires pouvant être verrouillées en position fermée par le premier moyen de verrouillage, caractérisé en ce qu'il comprend un second moyen de verrouillage (30) capable de maintenir les mâchoires ouvertes à angle aigu l'une par rapport à l'autre et prévu aussi pour permettre aux mâchoires de s'ouvrir à angle obtus l'une par rapport à l'autre.

2. Moyen support de ruban suivant la revendication 1, dans lequel la matière dont est fait le moyen d'accrochage (16) est plus élastique que la matière dont sont faites les mâchoires (12, 14).

3. Moyen support de ruban suivant la revendication 1, dans lequel le moyen d'accrochage (16) a une forme complémentaire de la forme d'une mâchoire (12, 14) et peut lui être directement adapté.

4. Moyen support de ruban suivant la revendication 1, dans lequel la matière dont est fait le moyen d'accrochage (16) est du caoutchouc.

5. Moyen support de ruban suivant la revendication 1, dans lequel les mâchoires (12, 14) sont séparables l'une de l'autre.

6. Moyen support de ruban suivant la revendication 1, dans lequel le moyen de verrouillage comprend un écrou à oreilles (5).

7. Moyen support de ruban suivant la revendication 1, dans lequel les mâchoires pivotent l'une par rapport à l'autre.

8. Moyen support de ruban suivant la revendication 1, dans lequel le moyen de verrouillage secondaire (30) comprend une partie flexible capable de maintenir les mâchoires ouvertes à angle aigu.

9. Méthode de fabrication d'un support de ruban de clôture électrique qui comprend un corps (11) prévu pour être monté sur une armature telle qu'un poteau de clôture, des mâchoires (12, 14) qui coopèrent fixée audit corps, un moyen d'accrochage (16) fixé sur au moins une desdites mâchoires et un premier moyen de verrouillage (19) pour lesdites mâchoires, dans lequel la matière dont est fait le moyen d'accrochage a un coefficient de frottement plus grand que la matière dont sont faites les mâchoires, l'arrangement et la structure étant tels que les mâchoires peuvent être fermées sur ledit ruban pour le fixer par le moyen d'accrochage, lesdites mâchoires pouvant être verrouillées en position fermée par le premier moyen de verrouillage, caractérisé en ce qu'il comprend un second moyen de verrouillage (30) capable de maintenir les mâchoires ouvertes à la fois à angle aigu et à angle obtus l'une par rapport à l'autre.
